# EUROPEAN PATENT SPECIFICATION

(11) **EP 1 337 161 B1**
(45) Date of publication and mention of the grant of the patent: **10.09.2014**
(21) Application number: 01983593.3
(22) Date of filing: 20.11.2001
(51) Int. Cl.: A23L 1/24, A23L 1/39

(54) **OIL-IN-WATER FOODSTUFF EMULSION OF THE MAYONNAISE TYPE HAVING A REDUCED FAT LEVEL, AND A PROCESS FOR ITS PREPARATION**
MAYONNAISEARTIGE ÖL - IN - WASSER EMULSION MIT REDUZIERTEM FETTGEHALT UND VERFAHREN ZU DEREN HERSTELLUNG
EMULSION ALIMENTAIRE DE TYPE AQUEUX, DU GENRE MAYONNAISE, A TENEUR LIPIDIQUE REDUITE, ET SON PROCEDE DE FABRICATION

(30) Priority: 20.11.2000 EP 00125190; 22.12.2000 EP 00128339
(43) Date of publication of application: 27.08.2003
(73) Proprietor: SOCIETE DES PRODUITS NESTLE S.A., 1800 Vevey (CH)
(72) Inventor: OBERACKER, Thomas, 84577 Tuessling (DE); SCHROEDER, Volker, 84577 Tuessling (DE)
(74) Representative: Mollet, Beat Max
(86) International application number: PCT/EP2001/013447
(87) International publication number: WO 2002/039833

(56) References cited:
- EP-A- 0 101 007
- EP-A- 0 377 312
- EP-A- 0 716 811
- EP-A- 0 792 587
- EP-A- 1 008 380
- DE-A- 19 856 604

## Description

The present invention concerns a foodstuff in the form of an oil-in-water emulsion of the mayonnaise type, and a process for its preparation.

In order to meet the requirements of modern nutrition, there is a tendency in the contemporary foodstuff industries to create products which resemble as closely as possible traditional high-fat products, but which have reduced fat levels.

One of the traditional foodstuff products having high fat levels are oil-in-water emulsions of the mayonnaise type. Traditional mayonnaise products have fat contents of 80 % by weight and more. They consist of oil, normally a vegetable oil or a mixture of vegetable oils, an emulsifier, traditionally on egg yolk basis, an edible acid as e.g. acetic acid (vinegar) or citric acid (lemon juice), as well as further ingredients as salt, sugar or sweetener and further ingredients as spices, flavorings and mustard which are only present for flavoring reasons.

The fat (oil) content of the mayonnaise is not only important for culinary reasons, but also necessary to provide the desired rheological properties, i.e. the typical creamy, shape-retaining texture of a traditional mayonnaise products. A simple reduction of the oil level of the traditional products gives products of a too low viscosity, which are rather sauce like. Therefore, if the oil-level is to be reduced, special measures, and modifications of the basic recipes are required to provide products with the desired texture typical for a mayonnaise of a fat (oil) content of 80% by weight or more.

In other words, the problem with an oil-in-water emulsion having a reduced content of oil is that it normally also has a lower stability and a too low viscosity : This makes it difficult to provide to the consumer an acceptable product.

To compensate the loss of viscosity due to a reduced oil content, therefore, additional ingredients having a stabilizing and/or thickening funtionality are normally added to the emulsion products. The added thickening agents and/or so-called fat mimetics are typically of the carbohydrate type, for example suitable starches, gums or other polysaccharides. Said thickening agents or fat-mimetics act by increasing the viscosity of the aqueous phase of the oil-in-water emulsion, thereby increasing the viscosity of the emulsion and stabilizing it.

US Patent No. 4,923,707 and EP 0 377 312 A1 respectively disclose a process for manufacturing a mayonnaise comprising oil in an amount between 65 and 72 %, water , egg yolk, as the emulsifier, an edible acid, like vinegar, and a corn syrup having a low D.E. from about 27 to about 43 as further constituent. The specified corn syrup acts as the required thickening agent giving the desired structure to the final oil-in-water emulsion.

EP 0 792 587 A2 and US 5,795,614 respectively disclose reduced fat emulsified dressings having fat/oil contents from 10% to 40% by weight. In addition to the fat and/or oil the dressings contain 5 to 30% by weight of inulin which is a polysaccharide (polyfructosan) known to have fat-mimicking properties if used in sufficient amounts. To obtain the disclosed dressings, a mixture of the ingredients is pumped through a special high shear, high energy homogenizer operating at very high pressures in the range of about 345 bar to 1035 bar.

EP 1 008 380 A2 describes a process and apparatus for mixing or dispersing fluids using a mixing device with at least one inlet nozzle, at least one mixing chamber, and at least one outlet nozzle. The device is preferably operated at pressures from 100 to 800 bar for making products having oil contents from 10 to 30%. The products are not of the mayonnaise type.

The aim of the present invention is to provide to the consumer an oil-in-water emulsion of the type of a conventional mayonnaise having a reduced oil content, wherein it is not necessary, to compensate the reduced oil amout, to add to the oil-in-water emulsion a thickener, while obtaining an acceptable product for the consumer in terms of stability and viscosity.

Throughout the application and claims all the percentages are given in weight.

Preferably, the amount of oil is comprised between 65 and 72 %. The emulsifier is preferably present in an amount comprised between 4 and 8 %.

The present invention is based on the surprising finding that it is possible to prepare, by a process and under conditions suitable for foodstuffs, an oil-in-water emulsion of the mayonnaise type having the typical rheological properties of a mayonnaise of an oil content of 80%, which

The present invention concerns a foodstuff in the form of an oil-in-water emulsion of the mayonnaise type, comprising an edible oil or fat in an amount of from 55 up to 75%, an emulsifier in an amount of up to 10%, an edible acid and water, and, optionally, additional ingredients selected from sugar or sweetener, salt and other taste improving ingredients, without any stabilizer or thickener, the viscosity of the emulsion measured at 20 °C at a shear rate of 10 s⁻¹ being comprised between 5 and 40 Pa·s, wherein the average size of the oil droplets in the emulsion is below 10 µm.

contains less than 75% by weight of oil, without resorting to any additional ingredients having thickening functionality. The typical mayonnaise texture is provided by providing the emulsified oil in the form of droplets which have a size below the size of oil the droplets present in prior art oil-in-water emulsions of the mayonnaise type. The mayonnaise of the invention can be said to be a "physically" stabilized low-fat mayonnnaise, as opposed to low-fat mayonnaises of the prior art which can be regarded as "ingredient-stabilized" products as they require the additional presence of stabilizers and/or thickening agents to obtain the desired viscosity.

It is known that the viscosity of a mayonnaise product is, among other things, influenced by the particle size of the emulsified oil droplets present in the product. Mayonnaise products, therefore, are typically prepared by first preparing a pre-emulsion containing the desired ingredients in the requisite amounts and then reducing the size of the oil droplets in the pre-emulsion by passing it through an emulsifying mill, usually a so-called colloid mill. After the pass through the colloid mill the desired rheological properties are obtained.

It has, however, been observed that it is not possible by said traditional production techniques to obtain acceptable products if the oil content becomes about 75% and lower. It appears that it not possible to reduce the size of the emulsified oil droplets below a certain minimum. The inventors have found that it is not possible to increase, in the presence of amounts of water in excess of a certain level, in emulsifiers as colloid mills the energy input as it would be required to further reduce the particle size, and, at the same time, to control, during the milling procedure, the redistribution of the emulgator present in the pre-emulsion.

By using a different method, and feeding into said method a pre-emulsion having a reduced oil content, it was found according to the present invention that oil-in-water emulsions having fat contents below 75 %, especially in the range of from 55 to 75%, more preferably 65 to 72%, can be made which have, despite the reduced oil content, the viscosities of the conventional high-fat mayonnaise products having oil levels of 80 % and more. The applied method is described below in more detail.

However, it is to be noted that the mayonnaise product of the present invention may be obtained by other methods as well. Since it has been shown in the present application that oil-in-water emulsions having reduced sizes of the oil droplets (i) can be made, (ii) are stable, and (iii) have the viscosity and texture required for typical high-fat mayonnaise products, it may be possible for a person skilled in the art to design other processes for making the same product, e.g. processes comprising a final adjustment of the product composition after the appropriate droplet size has been produced in a previous step. Such emulsions are to be considered as emulsions of the present invention as well, even if they are not made by the process described below.

In other words, the possibility of obtaining a good product in terms of viscosity in accordance with the present invention is based on a reduced size of the oil droplets in the product; the reduced content of oil would normally lead to a product unacceptable for the consumer. But due to the small size of the oil droplets in the emulsion of the invention, it is possible to reach in the low fat emulsion of the invention the viscosity of a mayonnaise containing 80 % and more of oil.

The emulsion of the invention contains preferably about 65 to 72 % of edible oil or fat. The type of the edible oil or fat used is not critical and is an animal fat or a vegetable oil taken from the group consisting of corn oil, sunflower oil, soybean oil, cottonseed oil.

The water present in the product according to the invention is taken from the group consisting of pure water and water in which additional ingredients can be dissolved and/or suspended.

The average size of the oil droplets is such that, at the indicated oil contents, an acceptable emulsion having a viscosity in the range of from 5 to 40 Pa·s, preferably 10 to 35 Pa·s is obtained. It has been found that the average size of the oil droplets in the products of the invention is below 10 µm, and preferred ranges are below 8 µm, for example 4 µm.

The type of the emulsifier used according to the invention is not critical. Thus, the emulsifier, which can be used in liquid or dry form, is taken from the group consisting of unmodified egg yolk, liquid or dry, modified egg yolk, lecithin, phospholipid and protein. Preferably, the emulsifier used is egg yolk, modified or unmodified. By "modified egg yolk" in the present specification we understand egg yolk modified with enzymes or by fermentation, for example egg yolk modified with phospholipase A.

The amount of the emulsifier used is preferably comprised between 4 and 8 %, calculated as liquid egg yolk, and most preferably of about 5 to 6 %. Based on the dry matter content of the emulsifier, its amount is preferably between 2 and 4%.

The amounts of sugar or sweetener and salt in the emulsion are normally of less than 10 %. The amount of salt or sweetener and salt is preferably of about 0.5 to 4 %. These ingredients are only present for flavoring reasons.

The type of sugar or sweetener used is not critical and can be any type of edible sugar, but normally should not be a sugar or sweetener having a considerable stabilizing or thickening effect and/or not have a significant influence on the structure of the emulsion. The sugar used is preferably selected from the group consisting of fructose, lactose, glucose, saccharose, and the sweetener is peferably selected from the group consisting of xylite and aspartame.

The viscosity of the emulsion indicated in the present specification is the dynamic viscosity measured at 20 °C at a shear rate of 10s⁻¹, for example with a Carrimed Rheometer CS 100. The viscosity of the emulsion is preferably in the range of about 10 to 35 Pa·s.

The additional ingredients present in the emulsion for flavoring reasons are of a type and/or are present in amounts which are not providing stabilizing and/or thickening functionalities. These additional ingredients are preferably taken from the group consisting of mustard, spices and flavorings.

The emulsion of the invention is normally presented in packaged form, for example in a jar or in a tube. In the case of a presentation in a jar, the viscosity may be at lower end of the above ranges, for example in the range of 5 to 20 Pa·s. In the case of a presentation in a tube, said viscosity normally is higher, for example in the range of 10 to 40 Pa·s.

The product of the invention, though having a reduced oil content, has a viscosity in the same range as the normal mayonnaise products having an oil content of about 80 %.

The process by which the emulsions of the invention can be obtained is described below. Making the emulsion by the described process can not only be used to produce emulsions of the invention on commercial scale, but also can be conducted for the purpose of obtaining a sample of the product of the invention for comparison with samples of unknown origin which have a composition in accordance with the present invention. Such product comparison may provide additional evidence that the compared products are both products in accordance with the present invention.

According to the process of the invention, the requisite ingredients (oil or fat, emulsifier, edible acid, edible aqueous liquid, sugar, salt, additional ingredients) are mixed together to obtain a mixture in the form of a pre-emulsion having directly the desired final oil or fat content of from 55 up to 75%, and pumping said pre-emulsion at a pressure of less than 100 bar, through a pipe within which at least one tranversally arranged plate is mounted so that the pipe is partially obstructed, said plate presenting at least one opening through which the pre-emulsion is passed, and wherein the average size of the oil droplets in the emulsion is below 10 µm.

It is important according to the process of the invention that the pre-emulsion is pumped under a moderate to high pressure which is preferably comprised between 10 and 50 bar.

The ratio of the diameter of the tube to the effective diameter of the opening, i.e. the diameter of a circular bore of the same area as the actual opening, is of at least 5. The pipe comprises one or more plates, preferably from one to five plates and more preferably two plates. Typical diameters of the bore(s) in the plate are about 0,5 to 3 mm, typical diameters of the pipes are in the range of 20 to 80 mm. The diameter of the pipe is, among other things, selected with respect to the desired output of the process per time unit.

The use of plate-like installations in pipes for the formation of emulsions is already described for making products of other types and having different compositions.

EP 101 007 A2 describes a process for making pharmaceutical or cosmetic creames and ointments in the form of oil-in-water-emulsions by using a special jet dispergator utilizing the impingement of jets on the walls of the device or other jets. The emulsifiers are not food grade emulsifiers, and the products are not foodstuffs.

DE 195 42 499 describes the production of an aqueous dispersion of liposomes for parenteral administration for medical purposes, using a high pressure homogenisator working at pressures of from 500 to 1000 bar.

It is possible according to the present invention to produce in a continuous way a mayonnaise having a reduced oil content with a good viscosity and stability by using a process which is more economic and more compact. The step of preparing the pre-emulsion can be carried out with any suitable conventional mixing device. It is, however, also possible to carry out the process as batch process, using, for example, a cylinder fed with separate batches or portions of a pre-emulsion, and forcing said pre-emulsion through the bore in the plate by advancing a piston-like element.

In a similar discontinuous manner, the pre-emulsion may also be prepared in a tank with all the ingredients mixed together with the help of a conventional stirrer, and then the contents of the tank are pumped through the pipe under an of the appropriate pressure as mentioned above. In the continuous mode of the process, the oil or fat on the one hand and all the other ingredients on the other are brought in intimate contact in a pre-emulsification unit, for example, an in-line mixing chamber, and then pumped through the pipe.

The pumping can be carried out in several ways. In a first way, the pre-emulsion is pumped through a pipe comprising only one plate having only one opening. It is, however, also possible to pump the pre-emulsion through a pipe comprising two or more plates arranged one after the other, each plate comprising at least one opening. Preferably, the plate or plates have 1 to 10 openings. A solution with three or more plates is also possible, but not preferred.

A device for carrying out the process described hereinbefore, therefore, may consist of a pipe for the transport of the pre-emulsion under pressure, said pipe comprising at least one plate, each plate presenting at least one opening or bore. Upstream of the device, there is either a classical stirrer or a prehomogenizer to prepare the pre-emulsion. Downstream of the device, no further emulsification is necessary. The emulsion is then filled, under appropriate conditions for packaging a foodstuff emulsion, in jars or in tubes, for example.

In the device, for both embodiments, the pipe has such a diameter that a ratio of (diameter of the tube) : (diameter of each opening) is at least of about 5. Said ratio is preferably comprised between 10 and 100. The bores can be straight bores of circular or other sections, e.g. cylindrical bores, or they can be conical, for example.

The thickness of the plate is at least such that it can withstand the pressure of the pre-emulsion flowing through the pipe, and maintain said pressure.

In the case of a modified embodiment using more than one plate, the diameter of the opening(s) in the first of a number of subsequently arranged plates can either be greater than the diameter of the opening(s) in the following plate(s) or smaller. It is also possible that the openings have all the same size.

The device of the invention can be either disposed vertically or horizontally or inclined. In the case of the preparation of an emulsion having an oil content of 70 % or more, a vertically arranged device is preferred.

It is, for example, possible with a single plate/single bore-device to obtain an emulsion with oil droplets having a size of about 8 µm, the emulsion having a viscosity of about 10 Pa.s.

### Example 1

This is an example of the process of the invention, wherein 70 % sunflower oil, 6.7 % salted unmodified egg yolk, 14 % water, 3 % vinegar, 2 % sugar, 1 % salt and the additional ingredients are mixed together to form a pre-emulsion.

This pre-emulsion is then pumped under a pressure of 15 bar through a pipe comprising one plate, said plate having one opening, wherein the ratio of the diameter of the pipe on the diameter of the opening is of 20.

The obtained oil-in-water emulsion has a viscosity of 8 Pa.s. This product can be stored at room temperature during 9 months without any organoleptic negative problem.

### Example 2

A similar oil-in-water emulsion is prepared by mixing the following ingredients :

| | |
|---|---|
| 70 % | sunflower oil |
| 6 % | modified egg yolk |
| 14 % | water |
| 4 % | vinegar |
| 6 % | other ingredients, like sugar, salt, flavorings |

This premix is put in a tank and stirred with a conventional mixing device. This pre-emulsion is then pumped at a pressure of 25 bar through a pipe presenting one plate with 3 openings, having a ratio of tube diameter to each opening of 10. The flow rate of the pre-emulsion is around 200 kg/h.

The obtained emulsion has a viscosity of 20 Pa.s and an average size of the oil droplets of 4 microns.

The product has a good shelf life stability and remains stable during at least 6 months at ambient temperature.

## Claims

1. A foodstuff in the form of an oil-in-water emulsion of the mayonnaise type, comprising an edible oil or fat in an amount of from 55 up to 75%, an emulsifier in an amount of up to 10%, an edible acid and water, and, optionally, additional ingredients selected from sugar or sweetener, salt and other taste improving ingredients, without anythickener, the viscosity of the emulsion measured at 20 °C at a shear rate of 10 s⁻¹ being comprised between 5 and 40 Pa·s, wherein the average size of the oil droplets in the emulsion is below 10 µm.

2. A foodstuff according to claim 1, wherein the edible oil is a vegetable oil selected form the group consisting of corn oil, sunflower oil, soybean oil, cottonseed oil.

3. A foodstuff according to any of claims 1 or 2, wherein the amount of oil is comprised between 65 and 72%.

4. A foodstuff according to any of claims 1 to 3, wherein the emulsifier is taken from the group consisting of unmodified egg yolk, modified egg yolk, lecithin, phospholipid, protein.

5. A foodstuff according to any of claims 1 to 4, wherein the emulsifier, calculated as liquid egg yolk, is present in an amount comprised between 4 and 8%.

6. A foodstuff according to any of claims 1 to 5, wherein the viscosity is comprised between 10 and 35 Pa·s.

7. A foodstuff according to any of claims 1 to 6 wherein the additional taste improving ingredients are selected from the group consisting of mustard, spices and flavourings.

8. A foodstuff according to any of claims 1 to 7, wherein the amount of sugar or sweetener is less than 10%.

9. A foodstuff according to any of claims 1 to 8, wherein the sugar or sweetener is selected from the group consisting of fructose, lactose, glucose, saccharose, xylite and aspartam.

10. A process for the preparation of an oil-in-water emulsion according to any of claims 1 to 9, comprising mixing together all ingredients of the final emulsion to obtain a pre-emulsion having an oil content comprised between 55 and 75%, without any thickener, and pumping said pre-emulsion at a pressure of less than 100 bar through a pipe comprising at least one transversal plate, said plate having at least one opening and wherein the average size of the oil droplets in the emulsion is below 10 µm.

11. A process according to claim 10 wherein the ratio of the diameter of the pipe on the effective length of the opening is of at least 5.

## Patentansprüche

1. Nahrungsmittel in Form einer Öl-in-Wasser Emulsion der Mayonnaiseart, aufweisend ein essbares Öl oder Fett mit einem Gehalt von 55 % bis zu 75%, einen Emulgator mit einem Gehalt von bis zu 10%, eine essbare Säure und Wasser und optional weitere Zutaten, gewählt aus Zucker oder Süßungsmittel, Salz und anderen geschmacksverstärkenden Zutaten, ohne jegliches Verdickungsmittel, wobei die Viskosität, gemessen bei 20° C bei einer Schergeschwindigkeit von 10 s⁻¹, zwischen 5 und 40 Pa s liegt, wobei die durchschnittliche Größe der Öltröpfchen in der Emulsion unter 10 µm beträgt.

2. Nahrungsmittel entsprechend Anspruch 1, wobei das essbare Öl ein pflanzliches Öl ist, gewählt aus einer aus Maisöl, Sonnenblumenöl, Sojabohnenöl oder Baumwollsamenöl bestehenden Gruppe.

3. Nahrungsmittel entsprechend einem der Ansprüche 1 oder 2, wobei der Gehalt des Öls zwischen 65% und 72% liegt.

4. Nahrungsmittel entsprechend einem der Ansprüche 1 bis 3, wobei der Emulgator aus einer aus unverändertem Eigelb, verändertem Eigelb, Lecithin, Phospholipid, Protein bestehenden Gruppe gewählt ist.

5. Nahrungsmittel entsprechend einem der Ansprüche 1 bis 4 , wobei der Emulgator, bezogen auf flüssiges Eigelb, mit einem Gehalt zwischen 4% und 8% vorliegt.

6. Nahrungsmittel nach einem der Ansprüche von 1 bis 5, wobei die Viskosität zwischen 10 und 30 Pa s liegt.

7. Nahrungsmittel nach einem der Ansprüche von 1 bis 6, wobei die zusätzlichen geschmacksverstärkenden Zutaten gewählt sind, aus einer aus Senf, Gewürzen und Aromastoffen bestehenden Gruppe.

8. Nahrungsmittel nach einem der Ansprüche 1 bis 7, wobei der Gehalt an Zucker oder Süßungsmittel weniger als 10% beträgt.

9. Nahrungsmittel entsprechend einem der Ansprüche 1 bis 8, wobei der Zucker oder das Süßungsmittel aus einer aus Fruktose, Laktose, Glukose, Saccharose, Xylite und Aspartam bestehenden Gruppe gewählt ist.

10. Verfahren zur Herstellung einer Öl-in-Wasser-Emulsion entsprechend einem der Ansprüche 1 bis 9, aufweisend das Vermischen aller Zutaten der endgültigen Emulsion zum Erhalt einer Vor-Emulsion mit einem Ölgehalt zwischen 55% und 75%, ohne jegliches Verdickungsmittel, und das Pumpen dieser Vor-Emulsion, bei einem Druck von weniger als 100 bar, durch ein Rohr, aufweisend zumindest eine transversale Platte, wobei diese Platte zumindest eine Öffnung aufweist und wobei die durchschnittliche Größe der Öltröpfchen in der Emulsion unter 10 µm beträgt.

11. Verfahren entsprechend Anspruch 10, wobei das Verhältnis zwischen dem Durchmesser des Rohres und der effektiven Länge der Öffnung zumindest 5 beträgt.

## Revendications

1. Substance alimentaire sous la forme d'une émulsion huile dans eau de type mayonnaise, comprenant une huile ou une matière grasse comestible dans une quantité allant de 55 jusqu'à 75%, un émulsifiant dans une quantité allant jusqu'à 10%, un acide comestible et de l'eau, et, facultativement, des ingrédients supplémentaires choisis parmi sucre ou édulcorant, sel et autres ingrédients exhausteurs de goût, sans aucun agent épaississant, la viscosité de l'émulsion mesurée à 20 °C à un taux de cisaillement de 10 s⁻¹ étant comprise entre 5 et 40 Pa.s, dans laquelle la taille moyenne des gouttelettes d'huile dans l'émulsion est inférieure à 10 µm

2. Substance alimentaire selon la revendication 1, dans laquelle l'huile comestible est une huile végétale choisie parmi le groupe constitué d'huile de maïs, d'huile de tournesol, d'huile de soja, d'huile de graine de coton.

3. Substance alimentaire selon l'une quelconque des revendications 1 ou 2, dans laquelle la quantité d'huile est comprise entre 65 et 72%.

4. Substance alimentaire selon l'une quelconque des revendications 1 à 3, dans laquelle l'émulsifiant est pris parmi le groupe constitué de jaune d'oeuf non modifié, jaune d'oeuf modifié, lécithine, phospholipide, protéine.

5. Substance alimentaire selon l'une quelconque des revendications 1 à 4, dans laquelle l'émulsifiant, calculé comme jaune d'oeuf liquide, est présent dans une quantité comprise entre 4 et 8%.

6. Substance alimentaire selon l'une quelconque des revendications 1 à 5, dans laquelle la viscosité est comprise entre 10 et 35 Pa.s.

7. Substance alimentaire selon l'une quelconque des revendications 1 à 6, dans laquelle les ingrédients supplémentaires exhausteurs de goût sont choisis parmi le groupe constitué de moutarde, épices et agents aromatisants.

8. Substance alimentaire selon l'une quelconque des revendications 1 à 7, dans laquelle la quantité de sucre ou d'édulcorant est inférieure à 10%.

9. Substance alimentaire selon l'une quelconque des revendications 1 à 8, dans laquelle le sucre ou l'édulcorant est choisi parmi le groupe constitué de fructose, lactose, glucose, saccharose, xylite et aspartame.

10. Procédé pour la préparation d'une émulsion huile dans eau selon l'une quelconque des revendications 1 à 9, comprenant le mélange de tous les ingrédients de l'émulsion finale afin d'obtenir une pré-émulsion ayant une teneur en huile comprise entre 55 et 75%, sans aucun agent épaississant, et le pompage de ladite pré-émulsion à une pression inférieure à 100 bar à travers un conduit comprenant au moins une plaque transversale, ladite plaque présentant au moins une ouverture et dans lequel la taille moyenne des gouttelettes d'huile dans l'émulsion est inférieure à 10 µm.

11. Procédé selon la revendication 10, dans lequel le rapport du diamètre du conduit sur la longueur effective de l'ouverture est d'au moins 5.
